# EUROPÄISCHE PATENTSCHRIFT

(11) **EP 3 679 280 B1**
(45) Veröffentlichungstag und Bekanntmachung des Hinweises auf die Patenterteilung: **26.07.2023**
(21) Anmeldenummer: 18750381.8
(22) Anmeldetag: 31.07.2018
(51) Int. Cl.: F16K 7/06, F16K 11/02

(54) **VERTEILERVORRICHTUNG, VERFAHREN ZUM FÖRDERN VON FESTSTOFFEN UND VERFAHREN ZUM REINIGEN EINER VERTEILERVORRICHTUNG**
DISTRIBUTOR DEVICE, METHOD FOR CONVEYING SOLIDS, AND METHOD FOR CLEANING A DISTRIBUTOR DEVICE
DISPOSITIF DE DISTRIBUTION, PROCÉDÉ POUR LE TRANSPORT DE SOLIDES ET PROCÉDÉ POUR LE NETTOYAGE D'UN DISPOSITIF DE DISTRIBUTION

(30) Priorität: 05.09.2017 DE 102017215543
(43) Veröffentlichungstag der Anmeldung: 15.07.2020
(73) Patentinhaber: Hüttlin GmbH, 79650 Schopfheim (DE)
(72) Erfinder: PAASCHE, Christian Karl, 79713 Bad Saeckingen (DE)
(74) Vertreter: DREISS Patentanwälte PartG mbB
(86) Internationale Anmeldenummer: PCT/EP2018/070660
(87) Internationale Veröffentlichungsnummer: WO 2019/048139

(56) Entgegenhaltungen:
- DE-B- 1 282 387
- US-A- 3 734 133
- US-A- 3 744 524

## Beschreibung

### Stand der Technik

Die vorliegende Erfindung betrifft eine Verteilervorrichtung. Ferner betrifft die Erfindung ein Verfahren zum Fördern von Feststoffen mittels einer Verteilervorrichtung. Außerdem betrifft die Erfindung ein Verfahren zum Reinigen einer Verteilervorrichtung.

Aus dem Stand der Technik ist eine Vielzahl von Verteilervorrichtungen bekannt. Es sind konstruktiv aufwendige, teure und schlecht bedienbare Vorrichtungen bekannt, die meist nur mit einem hohen Aufwand reinigbar sind. Diese Vorrichtungen sind meist auch nicht cleaning-in-place-fähig.

Andere Vorrichtungen weisen Komponenten auf, die platzsparend in die Vorrichtungen integrierbar sind. Jedoch zeigt sich in der Praxis eine Verschleppung von Materialresten in andere vorhandene Kammern, sowie ein Verschmutzen von Ritzen in Dichtungsräumen. Weiterhin sind diese Lösungen nicht cleaning-in-place-fähig und müssen aufwendig zur Reinigung aus den Apparaten ausgebaut und demontiert werden.

Ferner sind Vorrichtungen bekannt, die ausschließlich für Flüssigkeiten geeignet sind, dies jedoch nur eingeschränkt aufgrund der Form der Kammern für den Transport von partikulären, pharmazeutischen Feststoffen.

US 3,734,133 offenbart eine Verteilervorrichtung nach dem Oberbegriff des Anspruchs 1.

### Offenbarung der Erfindung

Die Erfindung geht aus von einer Verteilervorrichtung nach Gattung des unabhängigen Anspruchs 1. Ferner geht die Erfindung aus von einem Verfahren zum Fördern von Feststoffen nach Gattung des unabhängigen Anspruchs 8. Außerdem geht die Erfindung aus von einem Verfahren zum Reinigen einer Verteilervorrichtung nach Gattung des unabhängigen Anspruchs 10.

Die erfindungsgemäße Verteilervorrichtung dient dem Fördern von Feststoffen, insbesondere pharmazeutische, partikuläre Feststoffe. Die Verteilervorrichtung weist nachfolgend auf
- ein Gehäuse mit wenigstens einer Einlassöffnung und wenigstens zwei Auslassöffnungen,
- ein einen Prozessraum ausbildendes Verteilermodul, wobei sich das Verteilermodul von der Einlassöffnung zu den Auslassöffnungen durch das Gehäuse erstreckt und das Verteilermodul zu jeder Auslassöffnung eine Abzweigung aufweist, wobei das Verteilermodul ein elastisches Bauteil ist, und
- entsprechend der Anzahl an Abzweigungen Mittel zur Unterbrechung einer Feststoffförderung in den Abzweigungen, wobei jedes Mittel ein Stellelement und einen Anschlag als Gegenstück zum Stellelement zum Zusammendrücken bzw, Quetschen einer Abzweigung aufweist, wobei die Anschläge an einer Innenwand des Gehäuses angeordnet sind und die Anschläge miteinander verbunden sind und eine Art Ringstruktur ausbilden.

Durch das Vorsehen der Verteilervorrichtung und der selektiv ansteuerbaren Mittel ist ein Verteilen von Feststoffen, Stoffströmen oder Portionen von einer Quelle auf mehrere Empfänger oder auf ein Leitungsnetz auf einfache Weise möglich. Infolge der kompakten Bauweise der Verteilervorrichtung lassen sich Toträume im Prozessraum auf einfache Weise reduzieren.

Vorzugsweise handelt es sich bei der Verteilervorrichtung sich um ein cleaning-in-place (CIP) fähiges Bauteil mit einem Verteilermodul, das den Modul-Prozessraum definiert. Der Prozessraum kann gleichzeitig die Verbindung von einer Quelle zu Empfängern oder einem Leitungsnetz herstellen. Bevorzugt sind Leitungen an der Auslassöffnung anschließbar, um die Verteilervorrichtung mit den Empfängern oder dem Leitungsnetz zu verbinden. Optional kann die Verteilervorrichtung auch direkt mit den Empfängern verbunden sein.

Ferner definiert der Prozessraum das Verteilermodul. Das Verteilermodul kann als ein Ventilkörper ausgebildet sein. Dabei ist das Verteilermodul innerhalb der Verteilervorrichtung geführt. Vorzugsweise weist das Gehäuse ein Ober- und ein Unterteil auf. Bevorzugt wird das Verteilermodul in das Ober- und ein Unterteil eingesetzt, bevor das Ober- und ein Unterteil zusammengefügt werden. Mittels der Mittel können die Abzweigungen wahlweise geschlossen oder freigegeben werden. Das Verteilermodul kann mindestens zwei, vorzugsweise drei und bevorzugt sechs oder mehr Auslassöffnungen aufweisen, sowie die mindestens eine Einlassöffnung für die Feststoffe. Bevorzugt liegen die Feststoffe, die vorzugsweise Füllstoffe (Exzipient) und Arzneistoffe (bswp. hochpotentes API) sind, als Pulver vor. Unter einer Abzweigung kann ein abgezweigter Arm, ein abgezweigtes schlauchförmiges Bauteil oder ein abgezweigtes Schlauchstück verstanden werden. Vorzugsweise schließen die Abzweigungen an die Zugänge an.

Vorzugsweise ist die Verteilervorrichtung mittels einer die Mittel ansteuernden Einheit, insbesondere Recheneinheit, HMI-Schnittstelle oder dergleichen, verbunden. Mit anderen Worten sind die Mittel eingerichtet mittels der Einheit angesteuert zu werden, um eine Unterbrechung der Feststoffförderung in einer gewünschten Abzweigung zu erzielen und um eine Feststoffförderung in wenigstens einer weiteren Abzweigung zu ermöglichen.

Die mindestens eine Einlassöffnung kann idealerweise von oberhalb der Verteilervorrichtung am Gehäuse angeordnet sein, wodurch der Produkttransport (=Feststoffförderung oder Feststofftransport) in den Prozessraum durch die Gravitationskraft unterstützt wird. Alternativ kann die mindestens eine Einlassöffnung an einer Seite der Verteilervorrichtung waagrecht am Gehäuse angeordnet sein. Vorzugsweise ist der Modul-Prozessraum gerade so groß dimensioniert, dass die mittlere Verweilzeit nur wenige Sekunden (0,05-10 Sekunden) beträgt. Für ein Material, welches bspw. mit einem Volumenstrom von 600 L/h durch dieses Modul fließt, ergibt sich mit der genannten Verweilzeitspanne ein Volumen von bspw. 0,0083-1,667 Liter. Bei der Dimensionierung des Prozessraumes sind vor allem die gewünschte Verweilzeit und die Zahl der gewünschten Abzweigungen ausschlaggebend. Bevorzugt sind die Abzweigungen möglichst nahe an der Einlassöffnungen bzw. den Zugängen angeordnet sein, sodass es kaum ein Totvolumen bei geschlossenen Abzweigungen gibt.

Bevorzugt sind die Querschnittsflächen der Einlass- und Auslassöffnung gleich groß, damit die Transportgeschwindigkeit beim Fördern der Feststoffe gleich hoch bleibt und sich Feststoffe nicht plötzlich absetzen.

Die Unteransprüche zeigen bevorzugte Weiterbildungen der Erfindung.

Erfindungsgemäß ist das Verteilermodul ein elastisches Bauteil ist, insbesondere ein Schlauch, der vorzugsweise aus einem Silikon oder aus einem Silikongemisch besteht.

Durch das Vorsehen des elastisch ausgebildeten Verteilermoduls bleibt das Verteilermodul reversibel beweglich. Dabei kann ein Zusammendrücken, oder Quetschen auf einfache Weise erfolgen. Ferner kann im Bedarfsfall das Verteilermodul ausgetauscht und ersetz werden.

Weiter vorteilhaft weist das Verteilermodul entsprechend der Anzahl an Einlassöffnungen Zugänge zum Fördern der Feststoffe in den Prozessraum auf, wobei jeder der Zugänge an einem Stutzen und/oder einem Flansch der wenigsten einen Einlassöffnung lösbar angeordnet ist.

Unter einem Zugang kann ein Einlass oder ein Eingang für Feststoffe verstanden werden.

Hierdurch lässt sich das Verteilermodul auf einfache Weise am Gehäuse lösbar positionieren und/oder fixieren. Aufgrund der Verspannung des Verteilermoduls an den Einlassöffnungen wird das Verteilermodul im Bereich der Abzweigungen immer bestrebt sein, den vollen Querschnitt zu öffnen. Bei beiden Varianten kann das Verteilermodul für jedes pharmazeutische Produkt spezifisch installiert werden. Diese Eigenschaft verhindert eine Querkontamination und trägt so zur Sicherheit von Probanden und Patienten bei.

Weiter vorteilhaft weist das Verteilermodul entsprechend der Anzahl an Auslassöffnungen Abgänge zum Fördern der Feststoffe aus dem Prozessraum auf, wobei jeder der Abgänge an einem Stutzen und/oder einem Flansch der wenigstens zwei Auslassöffnungen lösbar angeordnet ist.

Unter einem Abgang kann ein Auslass oder ein Ausgang für die Feststoffe verstanden werden.

Hierdurch wird eine weitere Möglichkeit bereitgestellt, das Verteilermodul auf einfache Weise am Gehäuse lösbar zu positionieren und/oder zu fixieren.

Aufgrund der Verspannung des Verteilermoduls an den Auslassöffnungen wird das Verteilermodul im Bereich der Abzweigungen immer bestrebt sein, den vollen Querschnitt zu öffnen. Bei beiden Varianten kann das Verteilermodul für jedes pharmazeutische Produkt spezifisch installiert werden. Diese Eigenschaft verhindert ebenfalls eine Querkontamination und trägt so zur Sicherheit von Probanden und Patienten bei.

Erfindungsgemäß weist jedes Mittel ein Stellelement und einen Anschlag als Gegenstück zum Stellelement auf.

Hierdurch lassen sich die Abzweigungen auf einfache Weise zusammendrücken bzw. quetschen. Vorzugsweise sind die Mittel eingerichtet, in Richtung von Anschlägen verfahren zu werden. Dabei dient der Anschlag zur Aufnahme des Stellelements. Vorzugsweise schließt das Stellelement ausreichend dicht, so dass ein leichter Unterdruck im Verteilermodul die Dichtigkeit nicht beeinflusst. Die Außenseiten des Prozessraumes sind idealerweise über spezielle Vorrichtungen, insbesondere Haken oder Ösen, mit den Stellelementen verbunden, sodass sich eine Abzweigung bei offenem Mittel auch wieder voll öffnet, um einen optimalen Durchgang für die Feststoffe zu gewährleisten.

Weiter vorteilhaft ist eine jede Abzweigung zwischen einem Stellelement und einem Anschlag angeordnet.

Erfindungsgemäß ist eine Mehrzahl an Anschlägen miteinander verbunden. Bevorzugt sind die Anschläge an einer Innenwand des Gehäuses angeordnet.

Weiter vorteilhaft sind die Stellelemente an einer Seite des Verteilermoduls mit dem Verteilermodul verbunden.

Vorzugsweise ist eine Verbindung zwischen den Stellmitteln und dem Verteilermodul reversibel, sodass dieses bei Bedarf produktspezifisch, oder für Wartungszwecke ausgetauscht werden kann.

Das Verteilermodul kann damit an den Stellmitteln und/oder den Flanschen und/oder an den Stutzen und Flanschen der Einlass- und/oder der Auslassöffnungen befestigt sein.

Vorzugsweise ist das Verteilermodul nur punktuell innerhalb des Gehäuses der Verteilervorrichtung befestigt. Das bringt den Vorteil, dass ein Großteil des Prozessraumes flexibel ist und dadurch Luftströmungen nachgibt. Das erzeugt produktseitig eine bewegliche Oberfläche und befördert den Produkttransport und verhindert somit auch bestmöglich Produktanlagerungen.

Das erfindungsgemäße Verfahren zum Fördern von Feststoffen mittels der Verteilervorrichtung weist die aufeinanderfolgenden Schritte auf:
- Fördern der Feststoffe in den Prozessraum des Verteilermoduls,
- Aktivieren mindestens eines ersten Mittels zur Unterbrechung der Feststoffförderung in mindestens einer ersten Abzweigung und im Ansprechen darauf
- Fördern der Feststoffe durch wenigstens eine weitere offene Abzweigung aus dem Verteilermodul.

Unter einer offenen Abzweigung kann eine nicht zusammengedrückte, oder ungequetschte Abzweigung verstanden werden.

Weiter vorteilhaft werden die Feststoffe mittels Unterdruck und Gravitation pneumatisch durch die wenigstens eine weitere offene Abzweigung des Verteilermoduls gefördert.

Um die Feststoffe von einer Quelle zu einem bestimmten Empfänger durch die Verteilervorrichtung zu fördern, können alle nicht gewünschten Abzweigungen mittels der Mittel geschlossen werden.

Somit bleibt dem Produkt nur ein Pfad durch das Verteilermodul. Mit Hilfe von Unterdruck und Gravitation kann das Produkt pneumatisch durch das Modul gefördert werden. Eine Transportgeschwindigkeit nimmt in dem Verteilermodul nicht ab, die Partikeln neigen damit weniger zum Absetzen und Blockierungen treten nicht auf. Ist der Transport zu einem Empfänger hin abgeschlossen, ist das Mittel eingerichtet, die Abzweigung zu schließen. Wenn ein neuer Empfänger ausgewählt wird, kann sich das Mittel wieder öffnen für eine nächste Feststoffförderung. Die Auswahl des Empfängers kann durch den Anwender bspw. über ein HMI oder durch eine zentrale Prozesssteuerung erfolgen.

Ein Verfahren zum Reinigen einer Verteilervorrichtung von Feststoffen weist die aufeinanderfolgenden Schritte auf:
- Fördern einer Reinigungsflüssigkeit in den Prozessraum des Verteilermoduls,
- abwechselndes Zusammendrücken und Freigeben der Abzweigungen infolge einer Aktivierung der Mittel und im Ansprechen darauf
- Fördern der mit Feststoffen versetzten Reinigungsflüssigkeit durch geöffnete Abzweigungen aus dem Verteilermodul.
- Wiederholen dieses Vorganges, bis aus dem Verteilermodul nur noch saubere Waschflüssigkeit herausströmt.

Vorzugsweise erfolgt die Reinigung automatisch. Zur Reinigung des Verteilermoduls kann diesem über eine Einlassöffnung Reinigungswasser zugeführt werden. Durch abwechselndes Freigeben der jeweiligen Abzweigungen infolge Aktivierung der Mittel, kann Reinigungswasser aufgestaut und wieder abgelassen werden. Dabei können alle Abzweigungen sauber gespült werden. Die Reinigungsflüssigkeit sollte dabei in ausreichender Menge und Geschwindigkeit durch den Prozessraum laufen. Die Reihenfolge der Schaltungen der Mittel kann zufällig, nach Bedarf oder vorprogrammiert erfolgen.

Nachdem der Prozessraum des Verteilermoduls sauber gespült ist, kann Trocknungsluft mit möglichst hoher Geschwindigkeit durch das Verteilermodul gefördert werden. Die Trocknungsluft sollte möglichst trocken (im Bereich von 1-10 g/kg) und warm (im Bereich von 30-90 °C) sein, um in kurzer Zeit viel Feuchte aufzunehmen.

### Kurze Beschreibung der Zeichnungen

Nachfolgend werden Ausführungsbeispiele der Erfindung unter Bezugnahme auf die begleitende Zeichnung im Detail beschrieben. In der Zeichnung ist:
- Figur 1: eine schematische Ansicht einer erfindungsgemäßen Ausführungsform,
- Figur 2: einen schematischen Schnitt durch die erfindungsgemäße Ausführungsform aus Figur 1,
- Figur 3: eine Draufsicht auf Komponenten der erfindungsgemäßen Ausführungsform aus Figur 2 und
- Figur 4: zeigt eine schematische Ansicht einer alternativen erfindungsgemäßen Ausführungsform.

### Ausführungsformen der Erfindung

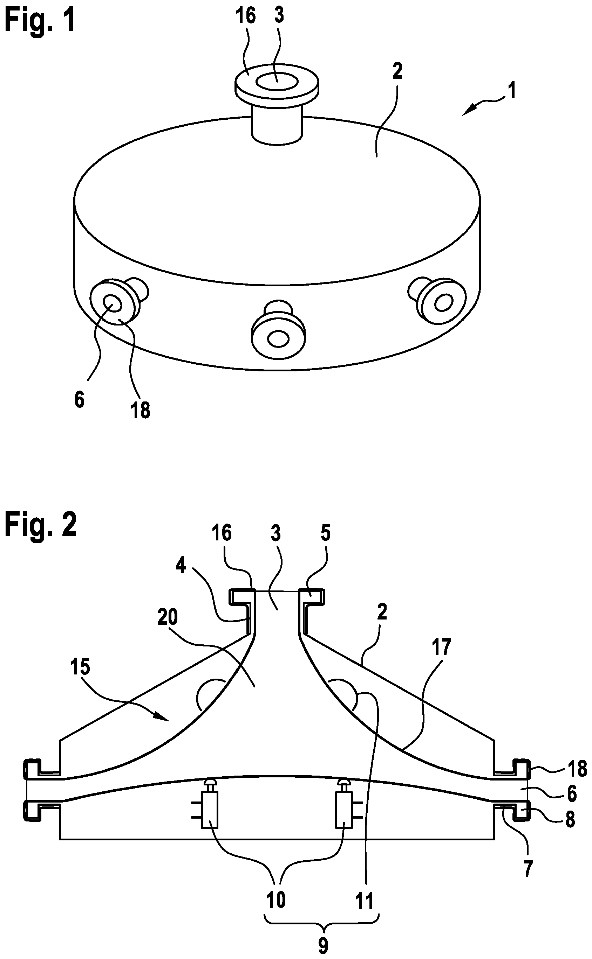

Figur 1 zeigt eine schematische Ansicht einer erfindungsgemäßen Ausführungsform einer Verteilervorrichtung 1 und Figur 2 zeigt einen schematischen Schnitt durch die Verteilervorrichtung 1 aus Figur 1.

Die Verteilervorrichtung 1 dient dem Fördern von Feststoffen, insbesondere pharmazeutische, partikuläre Feststoffe. Die Verteilervorrichtung 1 weist ein Gehäuse 2 mit einer Einlassöffnung 3 und sechs Auslassöffnungen 6 auf, wobei in der Figur 1 nur drei Auslassöffnungen sichtbar sind. Die Verteilervorrichtung 1 weist ein einen Prozessraum 20 ausbildendes Verteilermodul 15 auf. Das Verteilermodul 15 erstreckt sich von der Einlassöffnung 3 zu den Auslassöffnungen 6 durch die Verteilervorrichtung 1 bzw. das Gehäuse 2. Das Verteilermodul 15 weist zu jeder Auslassöffnung 6 eine Abzweigung 17 und Mittel 9 zur Quetschung der Abzweigungen 17 auf. Entsprechend der Anzahl an Abzweigungen 17 sind die Mittel 9 zur Unterbrechung einer Feststoffförderung in den Abzweigungen 17 vorgesehen.

Das Verteilermodul 15 ist innerhalb der Verteilervorrichtung 1 geführt und als ein Schlauch ausgebildet, der aus einem Silikon oder aus einem Silikongemisch besteht. Das Verteilermodul 15 weist einen Zugang 16 und entsprechend der Anzahl an Auslassöffnungen 6 Abgänge 18 auf. Der Zugang 16 ist eingerichtet, Feststoffe in den Prozessraum 20 einzubringen. Die Abgänge 18 sind eingerichtet, Feststoffe aus dem Prozessraum 20 wieder auszutragen. Der eine Zugang 16 ist an einem Stutzen 4 und einem Flansch 5 der Einlassöffnung 3 positioniert und fixiert. Weiter ist jeder Abgang 18 an einem Stutzen 7 und einem Flansch 8 der wenigstens zwei Auslassöffnungen 6 positioniert und fixiert.

Jedes Mittel 9 weist ein Stellelement 10 und einen Anschlag 11 zur Aufnahme des Stellelements 10 auf. Die Mittel 9 sind dabei innerhalb der Verteilervorrichtung 1 angeordnet. Die Anschläge 11 sind an einer Innenwand des Gehäuses 2 angeordnet. Die Anschlägen 11 sind miteinander verbunden und bilden eine Art Ringstruktur aus, wie in Figur 2 gezeigt. Die Stellelemente 10 sind an einer Seite des Verteilermoduls 15 mit dem Verteilermodul 15 verbunden.

Eine jede Abzweigung 17 ist zwischen einem Stellelement 10 und einem Anschlag 11 angeordnet. Damit ist eine Anzahl an Stellelementen 10 und Anschlägen 11 gleich einer Anzahl an Abzweigungen 17. Eine jede Abzweigung 17 ist zwischen einem Stellelement 10 und einem Anschlag 11 angeordnet.

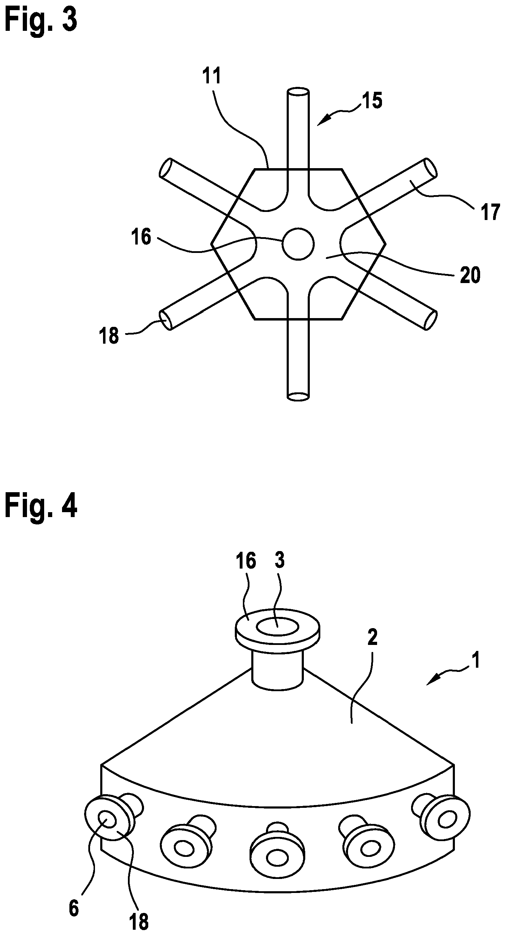

Figur 3 zeigt eine Draufsicht auf Komponenten der erfindungsgemäßen Ausführungsform aus Figur 2. Die Komponenten sind der Zugang 16, sechs Abzweigung 17, sechs Abgänge 18, der Prozessraum 20 und ein Ring aus Anschlägen 11.

Zum Fördern von Feststoffen, insbesondere pharmazeutische, partikuläre Feststoffe, durch die Verteilervorrichtung 1, werden nachfolgenden Verfahrensschritte durchlaufen:
- Fördern der Feststoffe in den Prozessraum 20 des Verteilermoduls 15,
- Aktivieren mindestens eines ersten Mittels 9 zur Unterbrechung der Feststoffförderung in mindestens einer ersten Abzweigung 17 und im Ansprechen darauf
- Fördern der Feststoffe durch wenigstens eine weitere offene Abzweigung 17 aus dem Verteilermodul 15.

Dabei werden die Feststoffe mittels Unterdruck und Gravitation pneumatisch durch die wenigstens eine weitere offene - also ungequetschte - Abzweigung 17 des Verteilermoduls 15 gefördert.

Bei einem Verfahren zum Reinigen der Verteilervorrichtung 1 von Feststoffen, insbesondere pharmazeutische, partikuläre Feststoffe, werden nachfolgenden Verfahrensschritte durchlaufen:
- Fördern einer Reinigungsflüssigkeit in den Prozessraum 20 des Verteilermoduls 15,
- abwechselndes Zusammendrücken und Freigeben der Abzweigungen 17 infolge einer Aktivierung der Mittel 9 und im Ansprechen darauf
- Fördern der mit Feststoff versetzten Reinigungsflüssigkeit durch geöffnete Abzweigungen 17 aus dem Verteilermodul 15.

Figur 4 zeigt eine schematische Ansicht einer alternativen erfindungsgemäßen Ausführungsform einer Verteilervorrichtung 1. Im Unterschied zur Figur 1 weist das Gehäuse 2 gemäß Figur 2 eine kreissegmentförmige Grundfläche auf, wohingegen das Gehäuse 2 der Figur 1 eine kreisförmige Grundfläche aufweist. Neben der Einlassöffnung 3 weist die Verteilervorrichtung 1 fünf Auslassöffnungen 6 auf, die kreisbogenseitig angeordnet sind.

## Patentansprüche

1. Verteilervorrichtung (1) zum Fördern von Feststoffen, insbesondere pharmazeutische, partikuläre Feststoffe, aufweisend
- ein Gehäuse (2) mit wenigstens einer Einlassöffnung (3) und wenigstens zwei Auslassöffnungen (6),
- ein einen Prozessraum (20) ausbildendes Verteilermodul (15), wobei sich das Verteilermodul (15) von der Einlassöffnung (5) zu den Auslassöffnungen (6) durch das Gehäuse (2) erstreckt und das Verteilermodul (15) zu jeder Auslassöffnung (6) eine Abzweigung (17) aufweist, wobei das Verteilermodul (15) ein elastisches Bauteil ist, und
- entsprechend der Anzahl an Abzweigungen (17) Mittel (9) zur Unterbrechung einer Feststoffförderung in den Abzweigungen (17), wobei jedes Mittel (9) ein Stellelement (10) und einen Anschlag (11) als Gegenstück zum Stellelement (10) zum Zusammendrücken bzw. Quetschen einer Abzweigung (17) aufweist, **dadurch gekennzeichnet, dass** die Anschläge (11) an einer Innenwand des Gehäuses (2) angeordnet sind und die Anschläge (11) miteinander verbunden sind und eine Art Ringstruktur ausbilden.

2. Verteilervorrichtung (1) nach Anspruch 1, wobei das Verteilermodul (15) ein Schlauch, der vorzugsweise aus einem Silikon oder aus einem Silikongemisch besteht, ist.

3. Verteilervorrichtung (1) nach einem der vorherstehenden Ansprüche, wobei das Verteilermodul (15) entsprechend der Anzahl an Einlassöffnungen (3) Zugänge (16) zum Fördern der Feststoffe in den Prozessraum (20) aufweist, wobei jeder der Zugänge (16) an einem Stutzen (4) und/oder einem Flansch (5) der wenigstens einen Einlassöffnung (3) lösbar angeordnet ist.

4. Verteilervorrichtung (1) nach einem der vorherstehenden Ansprüche, wobei das Verteilermodul (15) entsprechend der Anzahl an Auslassöffnungen (6) Abgänge (18) zum Fördern der Feststoffe aus dem Prozessraum (20) aufweist, wobei jeder der Abgänge (18) an einem Stutzen (7) und/oder einem Flansch (8) der wenigstens zwei Auslassöffnungen (6) lösbar angeordnet ist.

5. Verteilervorrichtung (1) nach einem der vorherstehenden Ansprüche, wobei eine jede Abzweigung (17) zwischen einem Stellelement (10) und einem Anschlag (11) angeordnet ist.

6. Verteilervorrichtung (1) nach einem der vorherstehenden Ansprüche, wobei die Stellelemente (10) an einer Seite des Verteilermoduls (15) mit dem Verteilermodul (15) verbunden sind.

7. Verfahren zum Fördern von Feststoffen, insbesondere pharmazeutische, partikuläre Feststoffe, mittels einer Verteilervorrichtung (1) nach einem der vorherstehenden Ansprüche, aufweisend die Schritte:
- Fördern der Feststoffe in den Prozessraum (20) des Verteilermoduls (15),
- Aktivieren mindestens eines ersten Mittels (9) zur Unterbrechung der Feststoffförderung in mindestens einer ersten Abzweigung (17) und im Ansprechen darauf
- Fördern der Feststoffe durch wenigstens eine weitere offene Abzweigung (17) aus dem Verteilermodul (15).

8. Verfahren nach Anspruch 7, wobei die Feststoffe mittels Unterdruck und Gravitation pneumatisch durch die wenigstens eine weitere offene Abzweigung (17) des Verteilermoduls (15) gefördert werden.

## Claims

1. Distributor device (1) for conveying solids, in particular pharmaceutical, particulate solids, comprising
- a housing (2) having at least one inlet opening (3) and at least two outlet openings (6),
- a distributor module (15) forming a process chamber (20), the distributor module (15) extending from the inlet opening (5) to the outlet openings (6) through the housing (2), and the distributor module (15) having a branch (17) to each outlet opening (6), the distributor module (15) being a resilient component, and
- corresponding to the number of branches (17), means (9) for interrupting conveyance of solids in the branches (17), each means (9) comprising an actuating element (10) and a stop (11) as a counterpart to the actuating element (10) for compressing or squeezing a branch (17), **characterized in that** the stops (11) are arranged on an inner wall of the housing (2) and the stops (11) are connected to one another and form a kind of ring structure.

2. Distributor device (1) according to claim 1, wherein the distributor module (15) is a tube which is preferably made of a silicone or a silicone mixture.

3. Distributor device (1) according to any of the preceding claims, wherein the distributor module (15) comprises, corresponding to the number of inlet openings (3), access points (16) for conveying the solids into the process chamber (20), wherein each of the access points (16) is detachably arranged on a connecting piece (4) and/or a flange (5) of the at least one inlet opening (3) .

4. Distributor device (1) according to any of the preceding claims, wherein the distributor module (15) comprises, corresponding to the number of outlet openings (6), exit points (18) for conveying the solids from the process chamber (20), wherein each of the exit points (18) is detachably arranged on a connecting piece (7) and/or a flange (8) of the at least two outlet openings (6).

5. Distributor device (1) according to any of the preceding claims, wherein each branch (17) is arranged between an actuating element (10) and a stop (11).

6. Distributor device (1) according to any of the preceding claims, wherein the actuating elements (10) are connected to the distributor module (15) on one side of the distributor module (15).

7. Method for conveying solids, in particular pharmaceutical, particulate solids, by means of a distributor device (1) according to any of the preceding claims, comprising the steps of:
- conveying the solids into the process chamber (20) of the distributor module (15),
- activating at least a first means (9) for interrupting the conveyance of solids in at least a first branch (17) and in response thereto
- conveying the solids through at least one further open branch (17) out of the distributor module (15).

8. Method according to claim 7, wherein the solids are conveyed pneumatically by means of negative pressure and gravity through the at least one further open branch (17) of the distributor module (15).

## Revendications

1. Dispositif de distribution (1) destiné à transporter des solides, en particulier des solides pharmaceutiques, particulaires, comprenant
- un boîtier (2) ayant au moins une ouverture d'entrée (3) et au moins deux ouvertures de sortie (6),
- un module de distribution (15) formant un espace de traitement (20), dans lequel ledit module de distribution (15) s'étend de l'ouverture d'entrée (5) aux ouvertures de sortie (6) à travers le boîtier (2) et le module de distribution (15) présente un branchement (17) vers chaque ouverture de sortie (6), dans lequel le module de distribution (15) est un composant élastique, et,
- selon le nombre de branchements (17), des moyens (9) destinés à interrompre un transport de solides dans les branchements (17), dans lequel chaque moyen (9) comprend un élément de commande (10) et une butée (11) en tant que contrepartie de l'élément de commande (10) pour comprimer ou bien presser un branchement (17), **caractérisé par le fait que** les butées (11) sont disposées sur une paroi intérieure du boîtier (2) et que les butées (11) sont reliées entre elles et forment une sorte de structure annulaire.

2. Dispositif de distribution (1) selon la revendication 1, dans lequel le module de distribution (15) est un tuyau flexible qui est constitué de préférence d'une silicone ou d'un mélange de silicones.

3. Dispositif de distribution (1) selon l'une quelconque des revendications précédentes, dans lequel le module de distribution (15) comprend, selon le nombre d'ouvertures d'entrée (3), des accès (16) pour transporter les solides dans l'espace de traitement (20), dans lequel chacun des accès (16) est disposé de manière amovible sur une tubulure (4) et/ou sur une bride (5) de ladite au moins une ouverture d'entrée (3) .

4. Dispositif de distribution (1) selon l'une quelconque des revendications précédentes, dans lequel le module de distribution (15) comprend, selon le nombre d'ouvertures de sortie (6), des sorties (18) pour transporter les solides hors de l'espace de traitement (20), dans lequel chacune des sorties (18) est disposée de manière amovible sur une tubulure (7) et/ou sur une bride (8) desdites au moins deux ouvertures de sortie (6) .

5. Dispositif de distribution (1) selon l'une quelconque des revendications précédentes, dans lequel chaque branchement (17) est disposé entre un élément de commande (10) et une butée (11).

6. Dispositif de distribution (1) selon l'une quelconque des revendications précédentes, dans lequel les éléments de commande (10) sont reliés d'un côté du module de distribution (15) au module de distribution (15) .

7. Procédé de transport de solides, en particulier de solides pharmaceutiques, particulaires, au moyen d'un dispositif de distribution (1) selon l'une quelconque des revendications précédentes, comprenant les étapes consistant à.
- transporter les solides dans l'espace de traitement (20) du module de distribution (15),
- activer au moins un premier moyen (9) pour interrompre le flux de solides dans au moins un premier branchement (17) et, en réponse à ceci,
- transporter les solides à travers au moins un autre branchement ouvert (17) hors du module de distribution (15).

8. Procédé selon la revendication 7, dans lequel les solides sont transportés de façon pneumatique au moyen de la dépression et de la gravité à travers ledit au moins un autre branchement ouvert (17) du module de distribution (15).
